**Europäisches Patentamt**

**European Patent Office**

**Office européen des brevets**

(19)

(11) Publication number : **0 446 405 B1**

## (12) EUROPEAN PATENT SPECIFICATION

(45) Date of publication of patent specification :
**12.10.94 Bulletin 94/41**

(21) Application number : **90110135.2**

(22) Date of filing : **29.05.90**

(51) Int. Cl.⁵ : $H01B\ 1/22$, $C08K\ 9/02$, $H01B\ 1/20$

(54) **Electrostatic attracting sheet.**

(30) Priority : **06.03.90 JP 55530/90**

(43) Date of publication of application :
**18.09.91 Bulletin 91/38**

(45) Publication of the grant of the patent :
**12.10.94 Bulletin 94/41**

(84) Designated Contracting States :
**DE FR GB**

(56) References cited :
**GB-A- 2 169 296**
**DATABASE DERWENT WORLD PATENT IN-DEX, AN 88-247082, Derwent Publications Ltd,London, GB; & JP-A-63 180 964**
**DATABASE DERWENT WORLD PATENT IN-DEX, AN 86-328815, Derwent Publications Ltd,London, GB; & JP-A-61 244 547**

(56) References cited :
**DATABASE DERWENT WORLD PATENT IN-DEX, AN 83-26454K, Derwent Publications Ltd, London, GB; & JP-A-58 020 722**
**PATENT OFFICE OF JAPAN, FILE SUPPLIERS PATENT ABSTRACTS OF JAPAN, Derwent Publications Ltd, London, GB; JP-A-61 241 336**
**PATENT OFFICE OF JAPAN, FILE SUPPLIERS PATENT ABSTRACTS OF JAPAN, Derwent Publications Ltd, London, GB; JP-A-59 006 235**

(73) Proprietor : **ABISARE CO., LTD.**
**864-1, Ryoke**
**Kakegawa-shi Shizuoka (JP)**

(72) Inventor : **Kasahara, Keiji**
**1128-14 Kakegawa**
**Kakegawa-shi, Shizuoka (JP)**

(74) Representative : **Patentanwälte Viering & Jentschura**
**Postfach 22 14 43**
**D-80504 München (DE)**

EP 0 446 405 B1

## Description

This invention relates to an electrostatic attracting sheet which is used with a holding plate and is adapted to fix or secure paper sheets in the socalled X-Y plotters, copying machines or the like to the holding sheet for a desired length of time by means of the Coulomb force.

The known electrostatic holding apparatuses utilize the electrostatic Coulomb force in order to attract a paper sheet or other object to be held on the holding apparatuses. Said electrostatic holding apparatuses each comprises an insulating base layer, a pair of electrodes formed thereon and an electrostatic attracting sheet laminated on and covering the base layer and electrodes. The attracting sheet is of a predetermined conductivity or of a limited volume resistivity. In said apparatuses, positive and negative terminals from a power source are connected to the electrodes so as to impart electrostatic charges to the electrostatic attracting sheet. Electric connection between the electrodes and the terminals is to be turned off to peel the paper sheets away from the attracting sheet.

Some examples of the known attracting devices are disclosed in the JP-B-55-20830 and -57-58872.

The electrostatic attracting sheets in said known devices have a structure such that spherical particles of carbon black are dispersed and embedded in a sheet of plastics or synthetic rubber. Extrusion method is used to form the sheets.

However, it has been difficult to disperse the carbon black particles homogeneously in the plastics or rubber. The attracting sheets made by such a method are disadvantageous because their dispersion is not well controlled but is likely to be influenced by conditions of the mixing of carbon black and/or the forming of the attracting sheet. Thus, they cannot exert their attracting force in a stable manner. In particular, fine spherical particles of carbon black will form bead chains of a kind which is called "structure". It is vaguely assumed that electrons flow through the chains or repeatedly jump from the aggregate particles of carbon black to the surrounding high polymer phases. This mechanism of electron current makes it difficult to obtain an attracting sheet comprising carbon black and having the volume resistivity uniform over its entire surface.

Thus, the values of volume resistivity vary within a wide range notwithstanding a constant amount (% by weight) of carbon black. Therefore, well-controlled stable attracting force falling within a narrow range has not been acquired for the electrostatic attracting sheet.

Therefore, the inventions disclosed in said Japanese Patent Publications are directed to the improvement in which such disadvantages in the known art are diminished by adding a stabilizing agent, a plasticizer, an antiaging agent, a lubricant and/or other special additives to the plastics of the attracting sheet. Such additives added to the electrically conducting material are intended to eliminate the bad influences of ambient temperature or humidity in order to stabilize the attracting force.

In spite of such an intention, a well stabilized attracting force of a desirable level has not been achieved up to now. Besides, such special additives have caused a considerable rise of manufacture costs.

On the other hand, it has been tried to manufacture a white electrostatic attracting sheet by dispersing in the plastics titanium dioxide powder whose particles are coated with tin. The particles are however almost spherical fine crystals, so that they cannot be homogeneously dispersed at such an amount of them that a satisfactory conductivity is enhanced to the plastics sheet.

From the GB-A-2169296 an electrically conductive composition is known comprising a binder and electrically conductive alkali metal titanate whiskers being dispersed in the binder which is made of various polymeric materials. The composition achieved in this way has a volume resistivity up to about the order of magnitude of $10^6$ $\Omega \cdot cm$ and is usable for materials which must be electrically conductive, such as conductive materials, resistance materials, antistatic materials, electrostatic charge protecting materials, electromagnetic wave shielding materials, etc.

An object of the invention is to provide an electrostatic attracting sheet which is free from such defects that have inherent to the known attracting sheets.

This object is achieved by the use of a composition comprising a sheet of a high polymer substance, such as plastic or rubber, and crystal whiskers of potassium titanate as conductive filler particles distributed in the sheet, for preparing an electrostatic attracting sheet, wherein the longitudinal axes of the crystal whiskers align with a direction substantially parallel to a surface of the plastics sheet and wherein the crystal whiskers are coated with a white conductive substance, a content of the crystal whiskers being about 2 to 8% by weight of the attracting sheet so as to impart thereto a volume resistivity of an order of $10^{12}$ to $10^{14}$ $\Omega.cm$.

The white coated whiskers in the attracting sheet in the invention desirably have a diameter of about 0.2 $\mu m$ to 0.5 $\mu m$ and a length of about 10 $\mu m$ to 20 $\mu m$. The sheet is about 0,1 to 0,5 mm thick. The white conductive substance is desirably selected from a group consisting of tin, antimony and nickel. The chemical vapor deposition method (CVD method) may be employed to coat the whiskers with a thin layer of the metal mentioned above. The thickness of said layer may be about 0.01 $\mu m$ to 0.1 $\mu m$ if the metal is applied at about 30% to 40% by weight of coated whiskers.

The plastics in which the conductive filler is dispersed may be ABS-resin, polyurethane resin, acrylic resin, polyamide resin such as nylon, polyacetal resin, polyvinylidene fluoride resin or polyester resin such as polyethylene terephthalate.

The volume resistivity of the order of $10^{12}$ to $10^{14}$ $\Omega$.cm of the electrostatic attracting sheet is achieved by adjusting relevant conditions and characteristics of the sheet or in manufacture thereof.

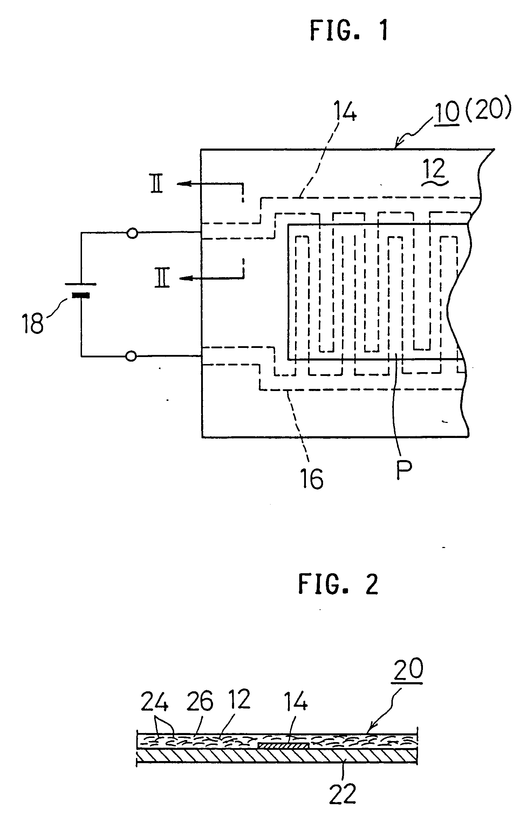

The kneading process within an extruder causes a shearing stress to such elongate crystal whiskers of potassium titanate as the conductive filler which are coated with white conductive substance, the stress quickly producing homogenous dispersion of the filler in the plastics. In the plastics sheet extruded from the extruder, the whiskers dispersed in said plastics form a stable three-dimensional network structure. The longitudinal axes of the conductive filler particles substantially align with a surface direction in which the surface of the attracting sheet extends, as shown in Fig. 2. This state of dispersion makes lower an electric resistivity in the surface direction than that in another direction in which the thickness of attracting sheet extends.

Such a higher resistivity in the direction of thickness provides a good electric insulation of a front surface from a back surface of the attracting sheet. Therefore, a thinner attracting sheet which exerts a higher attracting force can well protect operator's hand from an electric shock. Further, it is advantageous that the content of white coated whiskers as the conductive filler in the invention can be reduced to one half of the content of carbon black in the known attracting sheet. The volume resistivity of the order of $10^{12}$ to $10^{14}$ $\Omega$.cm can be stably obtained notwithstanding such a lower content of the whiskers.

Thus, the manufacture costs will be reduced, and at the same time variation of attracting force of the sheets will be decreased not only within any lot thereof but also between the lots. Consequently, quality assurance of the attracting sheets is made easier in the invention.

It is also to be noted that white or light gray-colored attracting sheets can be manufactured owing to the whiskers coated with the white conductive substance in the invention. This is a significant advantage which the known black sheets have never provided up to now. One of the merits will, for instance, be observed when thin lines are drawn on a transparent drawing sheet for an over-head projector (OHP). The thin lines can be inspected visually while they are drawn on an X-Y plotter which is attracting the drawing sheet.

The invention will be described in more detail referring to the drawings, in which:

Fig. 1     is a schematic plan of an electrostatic holder employing an electrostatic attracting sheet which is provided in an embodiment;

Fig. 2     is a cross section taken along a line II-II in Fig. 1;

Fig. 3     is a photograph which was taken of the attracting sheet in an electronic microscope; and

Fig. 4     is a schematic perspective view of the attracting sheet.

In an embodiment shown in Figs. 1, an electrostatic holder 10 comprises a plate 20 comprising an electrostatic attracting sheet 12. A positive electrode 14 and a negative electrode 16 are formed on a back side of the sheet and are of a comb-like shape and electrically connected to a power source 18. A drawing sheet of paper "P" is attracted to an upper surface of the sheet 12.

As is shown in Fig. 2, the plate 20 comprises an insulating base 22 on which the electrodes 14 and 16 are formed. Each of comb-teeth portions of one electrode is disposed between and spaced apart from every two comb-teeth portions of the other electrode.

Bonded to surfaces of the electrodes and a free surface of the base 22 is the electrostatic attracting sheet 12. In other words, said sheet 12 covers the electrodes and the base.

The electrostatic attracting sheet 12 which is formed by the melt-extrusion method is about 0.3 mm in thickness and has a fine internal structure as shown in Fig. 2. Dispersed in a matrix of an insulating polyacetal resin 26 are crystal whiskers 24 made of potassium titanate and coated with white conductive substance.

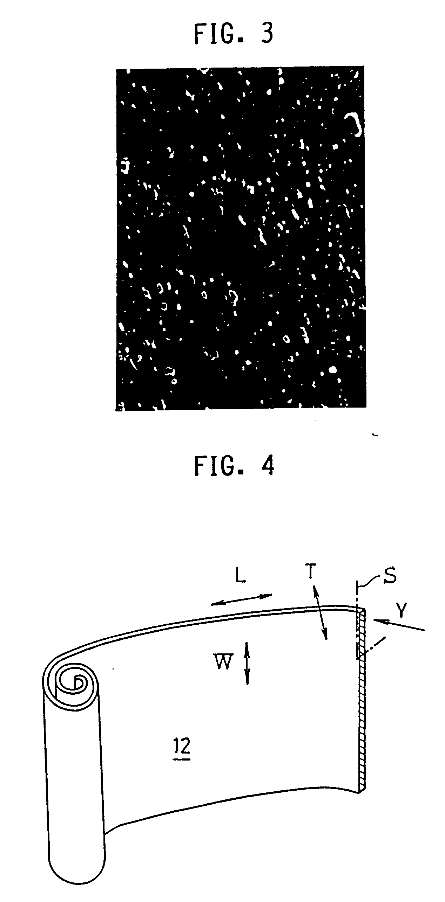

Longitudinal axes of said whiskers are almost in parallel with the surface of said attracting sheet 12. An electronic microscope of scanning type was used to observe more finely a state of distribution of the whiskers 24. A photograph (shown in Fig. 3) at magnification of 3000 was taken in the microscope with a specimen which was cut from the sheet 12 along a phantom line "S" in Fig.4. Inspection and photographing were done in a direction shown by an arrow "Y".

As will be seen from the photograph, circular and rectangular bright dots which are about 1.5 mm in diameter are cross sections of the whiskers 24. It is apparent that said whiskers are arranged in the matrix with their longitudinal axes in parallel with a longitudinal direction "L" of the sheet 12. There is no significant alignment of said whiskers in a direction of thickness of said sheet 12. This brings about a volume resistivity lower in the longitudinal direction "L" than that in a transverse direction "W" and in the thickness direction "T". Such an anisotropy in the volume resistivity is effective to insulate the upper surface from the back surface of the attracting sheet. Therefore, human hands are protected from any significant electric shock even if said sheets are manufactured considerably thin.

The white and electrically conductive substance in the embodiment is tin which is coated at a ratio of about 1 part by weight to 2 parts by weight of the whiskers. The CVD (chemical Vapor Deposition) method was utilized to deposit tin molecules on the whiskers.

The thus coated whiskers are about O.2 to O.5 μm in diameter and about 10 to 20 μm in length.

Table 1 shows characteristics of electrostatic attracting sheets which were prepared in the embodiment by varying the content (%) by weight of white coated whiskers 24 in the sheets 12, within a range from O% to 20%.

As seen from Table 1, volume resistivity of an order from $10^{12}$ Ω.cm to $10^{14}$ Ω.cm was imparted to the attracting sheets 12 with 2 (two) to 8 (eight) % by weight of the whiskers added in said sheets. A content higher than 8% by weight of whiskers is not desirable because the volume resistivity sharply decreases whereby an excessively high conductivity causes poor attracting force to the sheets12.

## Table 1    Examples of Attracting Sheets

| Added amount of wiskers (wt.%) | Volume resistivity ( Ω cm) | Bending modulus $(kgf/cm^2)$ | Thermal deformation temp. (°C) $(18.6\ kgf/cm^2)$ |
|---|---|---|---|
| O | $5.5 \times 10^{14}$ | $2.7 \times 10^{4}$ | 110 |
| 2 | $4.1 \times 10^{14}$ | $2.6 \times 10^{4}$ | 110 |
| 3 | $2.5 \times 10^{14}$ | -- | -- |
| 4 | $1.3 \times 10^{14}$ | -- | -- |
| 5 | $2.8 \times 10^{14}$ | $2.9 \times 10^{4}$ | -- |
| 8 | $8.2 \times 10^{12}$ | $3.1 \times 10^{4}$ | 120 |
| 15 | $6.7 \times 10^{11}$ | $3.3 \times 10^{4}$ | 120 |
| 20 | $4.8 \times 10^{10}$ | -- | -- |
| Test method (ASTM) | D-257 | D-790 | D-648 |

Despite the same volume resistivity of the attracting sheets as that of the known conventional attracting sheets in which carbon black is dispersed, the attracting sheets in the embodiment proved to be much stronger in paper-attracting force than said known sheets. Such an anisotropy in the volume resistivity is effective to insulate the upper surface from the back surface of the attracting sheet. Therefore, human hands are protected from any significant electric shock even if said sheets are manufactured considerably thin.

Such a stronger attracting force is deemed to have resulted from the arrangement of the whiskers in the thinner plastics sheets (for instance O.3 mm in thickness which is remarkably smaller than O.8 to 1.O mm in the known attracting sheets), and also from the anisotropy in the volume resistivity caused by the whiskers which are almost in parallel with the surface of sheet.

It takes a longer time for the electrostatic charges in the invention to diminish after the electric connection of the sheets to the power source has been turned off. This phenomenon may be regarded to relate to the anisotropy, although an exact mechanism is unknown. Anyway, it is desirable to employ in the electrostatic holder comprising the attracting sheet 12 such a control circuit that is adapted to reverse the polarity between the electrodes for a short instant before the power source is finally turned off.

The attracting sheets in the invention have a sufficient level of the bending modules, which enhances a higher durability of the sheets and a durable flatness thereof. The high temperature at which the attracting sheets deform makes it possible to select a temperature at which the electrodes are printed, within a wider range of temperatures.

**Claims**

1. Use of a composition comprising a plastics sheet (26) and crystal whiskers (24) of potassium titanate as conductive filler particles distributed in the plastics sheet (26), for preparing an electrostatic attracting sheet (12), wherein the longitudinal axes of the crystal whiskers (24) align with a direction substantially parallel to a surface of the plastics sheet (26) and wherein the crystal whiskers (24) are coated with a white conductive substance, a content of the crystal whiskers (24) being about 2 to 8% by weight of the attracting sheet (12) so as to impart thereto a volume resistivity of an order of $10^{12}$ to $10^{14}$ Ω.cm.

2. Use of a composition according to claim 1 wherein the diameter of the white coated crystal whiskers (24) is from about O.2 to O.5 μm and the length of the whiskers (24) is about 10 to 20 μm.

3. Use of a composition according to claim 1 or 2 wherein the white conductive substance is selected from a group consisting of tin, antimony and nickel.

4. Use of a composition according to claim 3 wherein the white conductive substance is tin which is contained at about 30% to 40% by weight of the coated whiskers (24) and coated 0.01 to O.1 μm thick.

**Patentansprüche**

1. Verwendung einer Zusammensetzung mit einer Kunststoffschicht (26) und Kristallwhiskern (24) aus Kaliumtitanat als in der Kunststoffschicht (26) verteilte, leitfähige Füllstoffteilchen, zum Herstellen einer elektrostatischen Anziehungsschicht (12), wobei die Längsachsen der Kristallwhisker (24) in einer zu einer Fläche der Kunststoffschicht (26) im wesentlichen parallelen Richtung ausgerichtet sind und wobei die Kristallwhisker (24) mit einer weißen leitfähigen Substanz beschichtet sind, wobei der Anteil der Kristallwhisker (24) etwa 2 bis 8 Gew.% der Anziehungsschicht (12) ist, so daß dieser ein spezifischer Volumenwiderstand in der Größenordnung von $10^{12}$ bis $10^{14}$ Ωcm erteilt wird.

2. Verwendung einer Zusammensetzung nach Anspruch 1, bei der der Durchmesser der weißbeschichteten Kristallwhisker (24) etwa 0.2 bis 0.5 μm ist und Länge der Whisker (24) etwa 10 bis 20 μm ist.

3. Verwendung einer Zusammensetzung nach Anspruch 1 oder 2, bei der die weiße leitfähige Substanz aus einer Zinn, Antimon und Nickel enthaltenden Gruppe ausgewählt ist.

4. Verwendung einer Zusammensetzung nach Ansprch 3, bei der die weiße leitfähige Substanz Zinn ist, das in etwa 30 bis 40 Gew.% der beschichteten Whisker (24) enthalten und in einer Dicke von 0.01 bis 0.1 μm aufgetragen ist.

**Revendications**

1. Utilisation d'une composition comprenant une feuille de plastique (26) et des whiskers crystallins (24) de titanate de potassium en tant que particules conductrices de remplissage distribués dans la feuille de plastique (26), pour la préparation d'une feuille électrostatique attractive (12), dans laquelle les axes longitudinaux des whiskers crystallins (24) s'alignent selon une direction sensiblement parallèle à une surface de la feuille plastique (26) et dans laquelle les whiskers cristallins (24) sont revêtus d'une substance conductrice blanche, la teneur en whiskers cristallins (24) étant d'environ 2 à 8% en poids de la feuille attractive (12) de sorte à lui conférer une résistivité volumique de l'ordre de $10^{12}$ à $10^{14}$ Ω cm.

2. Utilisation d'une composition selon la revendication 1, dans laquelle le diamètre des whiskers cristallins blancs revêtus (24) est d'environ 0,2 à 0,5 μm et la longueur des whiskers (24) est d'environ 10 à 20 μm.

3. Utilisation d'une composition selon la revendication 1 ou 2, dans laquelle la substance conductrice blanche est choisie dans le groupe consistant en étain, antimoine et nickel.

4. Utilisation d'une composition selon la revendication 3, dans laquelle la substance conductrice blanche est de l'étain qui est contenu selon une proportion de 30 à 40% en poids des whiskers revêtus (24), et dont le revêtement est de 0,01 à 0,1 μm d'épaisseur.

FIG. 1

FIG. 2

## FIG. 3

## FIG. 4